Europäisches Patentamt

**European Patent Office**

Office européen des brevets

(19)

(11) Publication number: **0 074 709**
**A2**

(12)

# EUROPEAN PATENT APPLICATION

(21) Application number: **82303988.8**

(22) Date of filing: **28.07.82**

(51) Int. Cl.³: **B 63 B 21/52**

(30) Priority: **28.07.81 GB 8123261**

(43) Date of publication of application:
**23.03.83 Bulletin 83/12**

(84) Designated Contracting States:
**DE FR GB IT NL SE**

(71) Applicant: **BALMORAL NAV-AIDS LIMITED**
**115 Wansunt Road**
**Bexley Kent, DA5 2DN(GB)**

(72) Inventor: **Campbell, William John**
**115 Wansunt Road**
**Bexley Kent, DA5 2DN(GB)**

(74) Representative: **Pratt, David Martin et al,**
**Brookes & Martin High Holborn House 52/54 High**
**Holborn**
**London. WC1V 6SE(GB)**

(54) Buoy.

(57) A buoy comprises two flotation units (1) and three protective layers (A, B and C). Each flotation unit (1) is sandwiched between a pair of protective layers (A, B and B, C). Each protective layer (A, B and C) is constituted by a plurality of vehicle tires (4), and the periphery of each protective layer extends outwardly beyond the periphery of the adjacent flotation unit (1). The protective layers (A, B and C) and the flotation units (1) are clamped together by tie means (9 and 10) passing therethrough and acting against the outer surfaces of the outer protective layers (A and C).

FIG.1.

Claim(s) Nr 3,8-10,12,14,16,18-21
~~to be~~ abandoned

- 1 -

# BUOY

This invention relates to a buoy such as a pendant buoy, a navigation buoy, a mooring buoy, or a chain-support buoy.

Traditionally, buoys are made from steel, which results in considerable manufacturing and maintenance costs. Thus, a steel buoy requires three or four different skilled tradesman for manufacture and maintenance. Moreover, steel buoys require expensive processing, such as shot-blasting, a fine surface finish, and expensive anti-corrosion treatment such as epoxy painting which must be done at controlled temperatures. Another disadvantage of steel buoys is their considerable weight. Thus, the servicing or repositioning of buoys at sea requires large service craft provided with substantial lifting equipment. For example, when a pendant buoy is removed from the sea for servicing or repositioning, it is hauled over a 4 foot diameter steel roller at the rear of the service craft.

Various attempts have been made to obviate these disadvantages by making buoys from glass fibre.

Unfortunately, known glass fibre buoys tend to be damaged as they are hauled over the steel roller of a service craft.

The aim of the invention is to provide a buoy which does not suffer from the disadvantages of known buoys.

In its broadest aspect the present invention provides a buoy comprising a flotation unit sandwiched between a pair of fenders, wherein the periphery of each of the fenders extends outwardly beyond the periphery of the flotation unit.

The invention also provides a buoy comprising at least one flotation unit and at least two protective layers, the or each flotation unit being sandwiched between a pair of protective layers, each protective layer being constituted by at least one vehicle tire, and the periphery of each protective layer extending outwardly beyond the periphery of the adjacent flotation unit.

Preferably, the tires are used lorry tires, and the or each flotation unit has a glass fibre shell filled with rigid closed-cell polyurethane foam.

In a preferred embodiment, the or each flotation unit is of annular cross-section, and has an external profile in the form of a "rounded five-pointed star". Each protective layer is then constituted by five symmetrically-positioned tires.

Advantageously, there are two flotation units and three protective layers, one of the protective layers being positioned between the two flotation units and being effective to sandwich each of the flotation units together with one of the other protective layers. In certain circumstances, e.g. where increased buoyancy is desired, flotation units with other external profiles such as square, circular or elliptical can be adopted. Where increased buoyancy is required, there may be three (or more) flotation units and four (or more) protective layers. Where less buoyancy is needed, there may be one flotation unit and two protective layers.

Advantageously, the protective layers and the flotation unit(s) are clamped together by tie means passing therethrough and acting against the outer surfaces of the outer protective layers. Where each protective layer has five tires, the tie means may be constituted by five tire tie tubes, each tire tie tube passing through the central open area within a respective tire of each protective layer, and each tie tube passing through a respective compression tube formed in the or each flotation unit. In this case, the compression tubes of the or each flotation unit may be moulded into position during the formation of the flotation unit(s). Preferably, the compression tubes are made of a plastics material, such as ABS, which is compatible with glass fibre.

Advantageously, each of the tire tie tubes has a first end construction fixed to one end thereof and a second end construction detachably fixed to the other end thereof, each end construction being provided with an end plate for engagement within the adjacent inner rim of a respective tire of the adjacent protective layer. Preferably, each first end construction is welded to its tire tie tube, and each second end construction is threadably engageable with its tire tie tube.

In a preferred embodiment, the tie means is further constituted by a central tie tube which is positioned substantially centrally within the interior of the buoy, the central tie tube passing through the open central portion of the or each flotation unit and through the open regions defined in the central portions of the protective layers by the symmetrically-positioned tires of those layers, the central tie tube being provided with first and second compression plates, each of which acts against the outer surface of the adjacent flotation unit. Advantageously, the first compression plate is fixed to the central tie tube adjacent to one end thereof, and the second compression plate is detachably fixed to the central tie tube adjacent to the other end thereof. Preferably, the first compression plate is welded to the central tie tube, and the second compression plate is bolted to an end plate which is welded to the central tie tube. Conveniently, each of the compression plates is provided with a plurality of equispaced channel plates welded to one surface thereof, each of said channel plates being engageable within a respective recess formed in the outer surface of the adjacent flotation unit.  Preferably, a layer of resilient material is sandwiched between each of the channel plates and its corresponding recess.  Said resilient material is preferably rubber or neoprene.

Conveniently, the or each flotation unit is formed with a respective projection for engagement with the inner rim of each of the tires sandwiching that flotation unit, each of said projections being shaped to complement the shape of the inner rim of the associated tire.  This ensures that the tires are held firmly against the flotation unit(s).

A pendant buoy constructed in accordance with the invention will now be described, by way of example, with reference to the accompanying drawings, in which:-

Fig. 1 is a part-sectional side elevation of the pendant buoy;

Fig. 2 is a plan view of the pendant buoy;

Fig. 3 is a cross-section taken on the line III-III of Fig. 1;

Fig. 4 is a side elevation of the central tie tube of the buoy;

Fig. 5 is an underneath view of the upper compression plate of the central tie tube;

Fig. 6 is a side elevation of a tire tie tube of the buoy and one of its end constructions; and

Fig. 7 is a side elevation of the other end construction of the tire tie tube of Fig. 6.

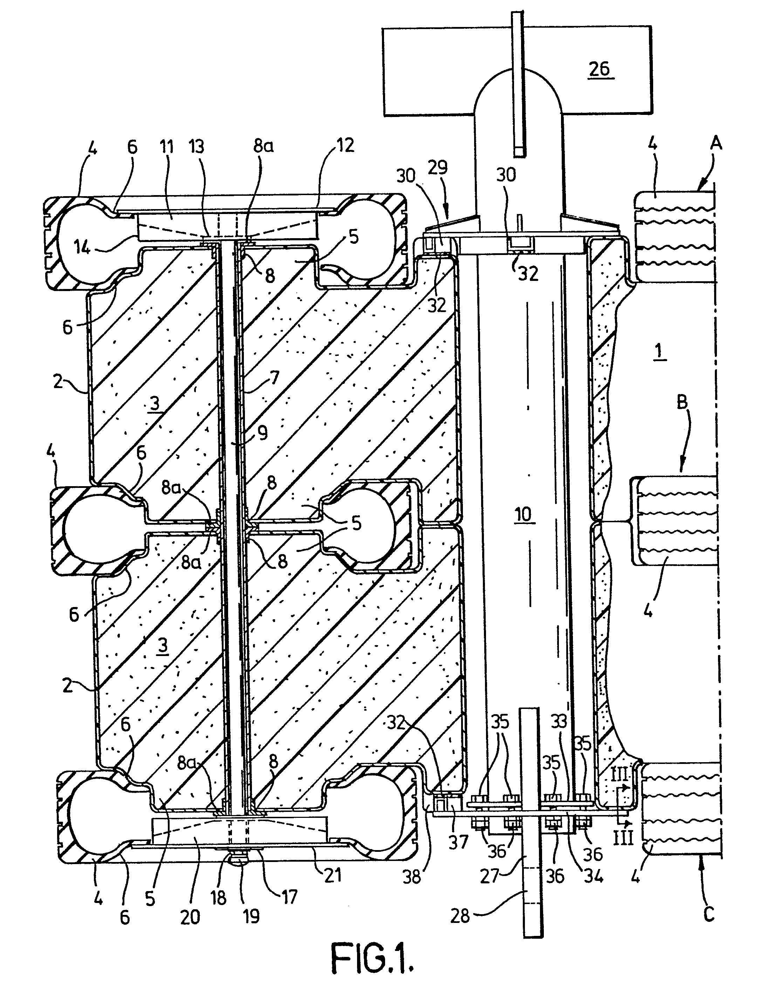

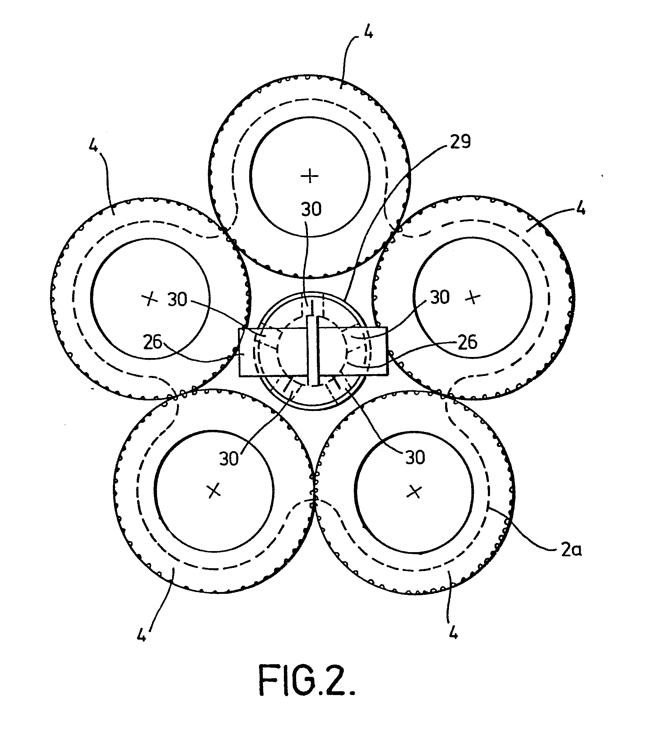

Referring to the drawings, Fig. 1 shows a pendant buoy having a pair of vertically-spaced flotation units 1, and three protective layers A, B and C, each pair of adjacent layers, A, B and B, C sandwiching one of the flotation units. Each flotation unit 1 has an annular glass fibre shell 2 filled with rigid, closed-cell polyurethane foam 3. Each shell 2 has an external profile 2a (shown in dashed lines in Fig. 2) in the form of a "rounded five-pointed star", and a generally circular internal profile 2b (shown in dashed lines in Fig. 2) which defines a central aperture. Each protective layer A, B or C is constituted by five symmetrically-positioned, used lorry tires 4.

The upper and lower surfaces of each of the flotation units 1 are formed with five hub-like projections 5. Each of the projection 5 is shaped to mate with the inner edge of the inner rim 6 of one of the tires 4 (see Fig. 1). Each flotation unit 1 is provided with five symmetrically-positioned compression tubes 7. As best shown in Fig. 1, each compression tube 7 is positioned between a pair of end caps 8. The end caps 8 and the compression tubes 7 are moulded into position during the formation of the flotation units 1. The compression tubes 7 and the end caps 8 are made of a plastics material (such as ABS) which is compatible with glass fibre. Each of the end caps 8 has an outwardly-extending flange 8a which overlies the corresponding upper or lower surface of the associated flotation unit 1. The flanges 8a are dimensioned so that adjacent flanges engage one another inside the tires 4 of the layer B.

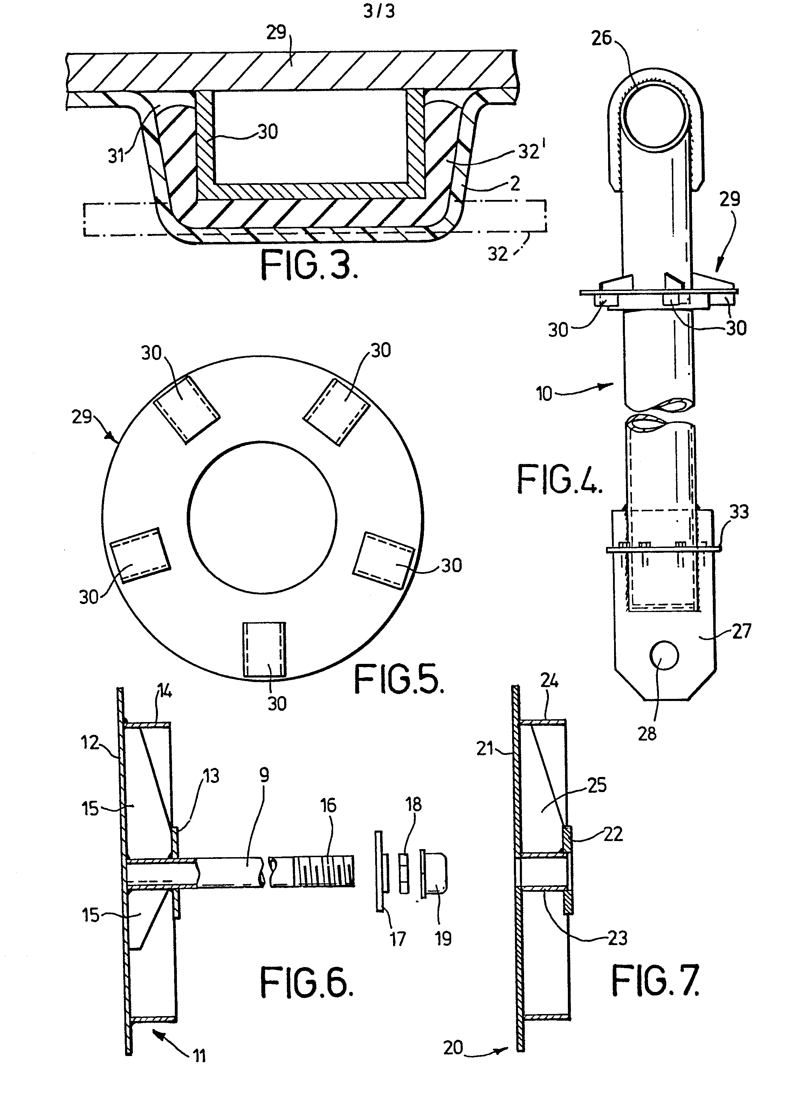

The "double-decker sandwich" of tire layers A, B and C and flotation units 1 is held together (as is described below in greater detail) by means of five steel tire tie tubes 9, and a central tie tube 10. The upper end of each of the tie tubes 9 is welded to an upper end construction 11 (see Fig. 6). Each tie tube 9 passes through a respective pair of aligned compression tubes 7 of the two flotation units 1. Each upper end construction 11 has an end plate 12, a collar 13, and a cylindrical spigot 14. The end plate 12 of each upper end construction is shaped to engage within the upper inner rim 6 of the associated tire 4, and the collar 13 of that upper end construction engages with the upper flange 8a of the end cap 8 associated with the upper surface of the upper flotation unit 1. Each upper end construction 11 is strengthened by three equispaced gusset plates 15 which are welded to the associated end plate 12 and tie tube 9. The cylindrical spigot 14 of each upper end construction 11 is sized to mate with the inner edge of the inner rim 6 of associated tire 4. The free end portion of each tie tube 9 is provided with an external screw thread 16. A flanged nut 17, a lock nut 18, an internally-threaded blanking cap 19, and a lower end construction 20, are associated with the threaded portion 16 of each tie tube 9.

Each lower end construction 20 has an end plate 21 and a collar 22 welded to a tube 23(see Fig. 7). A cylindrical spigot 24 is welded to the end plate 21 of each lower end construction 20. The end plate 21 of each lower end construction 20 is shaped to engage within the lower inner rim 6 of the associated tire 4, and the collar 22 of that lower end construction engages with the lower flange 8a of the end cap 8 associated with the lower surface of the lower flotation unit 1. Each lower end construction 20 is strengthened by three equispaced gusset plates 25 welded to the tube 23 and the end plate 21 of that end construction. The cylindrical spigot 24 of each lower end construction 20 is sized to mate with the inner edge of the inner rim 6 of the associated tire 4. The tube 23 of each lower end construction 20 is sized so that the end construction is a loose fit over the free end portion of the associated tie tube 9. In use, the lower end constructions 20 are held in place (with their end plates 21 engaging within the associated tire rims 6, and their collars 22 engaging their associated end cap flanges 8a) by means of the flanged nuts 17. The lock nuts 18 are provided to lock the flanged nuts 17 in place, and the blanking caps 19 serve to prevent the ingress of water into the interiors of the tie tubes 9.

The central tie tube 10 passes through the aligned central apertures of the flotation units 1. A tubular member 26 is welded to the upper end of the tie tube 10, the tubular member constituting a lifting rope bollard. An anchor plate 27 is welded to the lower end of the tie tube 10, the anchor plate 27 being formed with a mooring eye 28.

An upper compression plate 29 is welded to the tie tube 10 just below the tubular member 26. Five equispaced channel plates 30 are welded to the lower face of the compression plate 29 (see Fig. 5). The channel plates 30 engage within corresponding recesses 31 formed within the upper surface of the central region of the upper flotation unit 1 (see Fig. 3). The recesses 31 are formed during the moulding of the glass fibre shell 2 of the upper flotation unit 1. A layer 32 of rubber is bonded to the base of each of the channel plates 30. Prior to insertion into their recesses 31, these layers of rubber have a configuration shown by the dash-lines 32 in Fig. 3. After insertion and compression the layers or rubber form buffer assemblies 32' against which the channel plates 30 resiliently engage.

An end plate 33 is welded to the tie tube 10 just above the anchor plate 27. A lower compression plate 34 is detachably fixed to the end plate 33 by means of eight equispaced bolts 35 and associated nuts 36. Five equispaced channel plates 37 (only one of which can be seen in the drawings) are welded to the upper face of the compression plate 34. The channel plates 37 engage within corresponding recesses 38 formed within the lower surface of the central region of the lower flotation unit 1. The engagement of the channel plates 37 and recesses 38 is not shown in detail, but is similar to the engagement of the channel plates 30 and recesses 31. In particular, each of the channel plates 37 is provided with a layer of rubber (not shown) which acts as a buffer assembly between that channel plate and its recess.

In use, the tire layers A,B and C and the flotation units 1 are clamped tightly together by means of the five tire tie tubes 9 (and their associated end structures 11 and 20) and the central tie tube 10 (and its associated compression plates 29 and 34).

The buoy described above is assembled, on a special jig (not shown) in the following manner. Although the buoy is assembled upside-down, the terms "upper", "lower", "upwardly-facing" and "downwardly-facing" will be used in the description of the assembly process as though the buoy was right-way up. Firstly, the tie tubes 9 and 10 are positioned on the jig with the upper end construction 11 of the tie tubes 9 and the upper compression plate 29 facing downwards. The five tires 4 of the layer A are then lowered into position over their tie tubes 9, with the edges of the upwardly-facing inner rims 6 of the tires engaging around the spigots 14 of the upper end constructions 11. The upper flotation unit 1 is then lowered into position with its upwardly-facing projections 5 engaging within the downwardly-facing inner rims 6 of the tires 4 of the layer A, with its recesses 31 engaging over the channel plates 30 of the upper compression plate 29, with the flanges 8a of its upper end caps 8 engaging the collars 13 of the upper end construction 11, and with its compression tubes 7 engaging around the tie tubes 9. The tires 4 of the layer B are then lowered into position, with their upwardly-facing inner rims 6 engaging around the downwardly-facing projections 5 of the upper flotation unit 1. The lower flotation unit 1 is then lowered into position, with its upwardly-facing projections 5 engaging within the downwardly-facing inner rims 6 of the tires 4 of the layer B, with the flanges 8a of its upper end caps 8 engaging the flanges 8a of the lower end caps 8 of the upper flotation unit 1, and with its compression tubes 9 engaging around the tie tubes 9. The tires 4 of the layer C are then positioned with their upwardly-facing inner rims 6 engaging around the downwardly-facing projections 5 of the lower flotation unit 1. The lower end constructions 20 are then placed in position, with their cylindrical spigots 24 engaging within the edges of the downwardly-facing inner rims 6 of the tires 4 of the layer C, and with their collars 22 engaging the flanges 8a of the lower end caps 8 of the lower flotation unit 1. The flanged nuts 17 are then screwed onto the threaded end portions 16 of the tie tubes 9. Next, the lower compression plate 34 is placed in position with its channel plates 37 engaging within the recesses 38 of the lower flotation unit 1. The lower compression plate 34 is then fixed to the end plate 33 by means of the bolts 35 and the nuts 36. The nuts 36 and the flanged nuts 17 are then tightened up a predetermined amount to clamp the tire layers A, B and C and the flotation units 1 firmly together. The lock nuts 18 and the blanking caps 19 are then screwed onto the threaded portions 16 of the tie tubes 9. The compression force holding the buoy together can be increased by inflating the tires 4 to a pressure of, for example, 40 p.s.i. As the clamping force which holds the tire layers A, B and C and the flotation units 1 together is increased, the layers of rubber are compressed by the channel plates 30 and 37 so that the rubber is forced into the U-shaped configuration 32'. In this way, the buffer assemblies substantially completely, and resiliently surround the channel plates 30 and 37.

The protective tire layers A, B and C serve to protect the flotation units 1 from being damaged, particularly when the bouy is being hauled out of the sea onto a service craft. In this context, it will be noted (see Fig. 2) that the outer periphery 2a of each of the flotation units 1 lies entirely within the peripheral outline of each of the tire layers A, B and C.

It will be apparent that the buoy described above has many advantages compared with known buoys. In particular, it is considerably less liable to damage than known glass fibre buoys. Moreover, if damage does occur, this will probably be isolated to one of the flotation units, and this can be easily replaced at sea. The damaged unit would then be returned to the shore for repair under ideal conditions. This obviously helps to reduce maintenance costs. Another important advantage of this buoy is its cheapness. Thus, not only are the flotation units cheap to make, but the used lorry tires (which constitute the main protection) usually cost nothing.

The type of buoy described above is also extremely versatile. Thus, where different reserve buoyancies are required, the buoy can be modified by varying the number of flotation units and the number of protective tire layers. This enables a buoy of any required reserve buoyancy to be made from a small number of basic parts, and so enables specific site operations (such as depth of water, mooring to be suspended etc) to be met easily. In practice, the buoy is relatively heavy when out of the water. However, by putting inner tubes into the tires and inflating, the buoyancy of the arrangement is considerably increased.

Another advantage of the buoy is that, because of its generally pentagonal configuration, it can be stored in any desired orientation. Thus, buoys can be stored either in the upright position, or on their sides. In either case, they can be stacked one upon another, and this saves valuable space. Moreover, the pentagonal configuration is also a safety feature, in that the buoys will remain static on the deck of a pitching ship, which makes life safer for the ship's crew.

It will be apparent that the buoy described above could be modified in a number of ways. For example, the buoy could have a generally triangular or square configuration, in which case each protective layer would have three or four tires. It is also possible, in the simplest form of the invention, to have a single, circular flotation unit sandwiched by a pair of tires.

The buoy described above could be used as an anchor pendant buoy, a mooring buoy, a chain-support buoy, or a navigation buoy.

0074709

CLAIMS

1.      A buoy comprising at least one flotation unit and at least two protective layers, the or each flotation unit being sandwiched between a pair of protective layers, each protective layer being constituted by at least one vehicle tire, and the periphery of each protective layer extending outwardly beyond the periphery of the adjacent flotation unit.

2.      A buoy as claimed in claim 1, wherein the or each flotation unit has a glass fibre shell filled with rigid closed-cell polyurethane foam.

3.      A buoy as claimed in claim 1 or claim 2, wherein the or each flotation unit is of annular cross-section, and has a generally pentagonal external profile.

4.      A buoy as claimed in claim 3, wherein each protective layer is constituted by five symmetrically-positioned tires.

5.      A buoy as claimed in any one of claims 1 to 4, wherein there are two flotation units and three protective layers, one of the protective layers being positioned between the two flotation units and being effective to sandwich each of the flotation units together with one of the other protective layers.

6.      A buoy as claimed in any one of claims 1 to 5, wherein the protective layers and the flotation unit(s) are clamped together by tie means passing therethrough

**0074709**

and acting against the outer surfaces of the outer protective layers.

7. A buoy as claimed in claim 6 when appendant to claim 4, wherein the tie means is constituted by five tire tie tubes, each tire tie tube passing through the central open area within a respective tire of each protective layer, and each tie tube passing through a respective compression tube formed in the or each flotation unit.

8. A buoy as claimed in claim 7, wherein the compression tubes of the or each flotation unit are moulded into position during the formation of the flotation unit(s).

9. A buoy as claimed in claim 7 or claim 8, wherein the compression tubes are made of a plastics material which is compatible with glass fibre.

10. A buoy as claimed in claim 9, wherein the compression tubes are made of ABS plastics material.

11. A buoy as claimed in any one of claims 7 to 10, wherein each of the tire tie tubes has a first end construction fixed to one end thereof and a second end construction detachably fixed to the other end thereof, each end construction being provided with an end plate for engagement within the adjacent inner rim of a respective tire of the adjacent protective layer.

12. A buoy as claimed in claim 11, wherein each first

Claim(s) Nr 3, 8-10, 12, 14, 16, 18-21 ~~to be~~ abandoned

end construction is welded to its tire tie tube, and each second end construction is threadably engageable with its tire tie tube.

13. A buoy as claimed in any one of claims 7 to 12, wherein the tie means is further constituted by a central tie tube which is positioned substantially centrally within the interior of the buoy, the central tie tube passing through the open cental portion of the or each flotation unit and through the open regions defined in the central portions of the protective layers by the symmetrically-positioned tires of those layers, the central tie tube being provided with first and second compression plates, each of which acts against the outer surface of the adjacent flotation unit.

14. A buoy as claimed in claim 13, wherein the first compression plate is fixed to the central tie tube adjacent to one end thereof, and the second compression plate is detachably fixed to the central tie tube adjacent to the other end thereof.

15. A buoy as claimed in claim 14, wherein the first compression plate is welded to the central tie tube, and the second compression plate is bolted to an end plate which is welded to the central tie tube.

16. A buoy as claimed in claim 15, wherein each of the compression plates is provided with a plurality of equispaced channel plates welded to one surface thereof, each of said channel plates being engageable within a respective recess formed in the outer surface of the adjacent flotation unit.

17. A buoy as claimed in claim 16, wherein a layer of resilient material is sandwiched between each of the channel plates and its corresponding recess.

18. A buoy as claimed in claim 17, wherein said resilient material is rubber.

19. A buoy as claimed in any one of claims 1 to 18, wherein the or each flotation unit is formed with a respective projection for engagement with the inner rim of each of the tires sandwiching that flotation unit, each of said projections being shaped to complement the shape of the inner rim of the associated tire.

20. A buoy comprising a flotation unit sandwiched between a pair of fenders, wherein the periphery of each of the fenders extends outwardly beyond the periphery of the flotation unit.

21. A buoy substantially as hereinbefore described with reference to, and as illustrated by, the accompanying drawings.

FIG.1.

FIG.2.

0074709

FIG.3.

FIG.4.

FIG.5.

FIG.6.

FIG.7.